(19) Europäisches Patentamt
European Patent Office
Office européen des brevets

(11) Veröffentlichungsnummer : **0 427 797 B1**

(12) **EUROPÄISCHE PATENTSCHRIFT**

(45) Veröffentlichungstag der Patentschrift :
**14.09.94 Patentblatt 94/37**

(51) Int. Cl.$^5$ : **G01B 9/02,** G01J 3/45

(21) Anmeldenummer : **90901537.2**

(22) Anmeldetag : **15.01.90**

(86) Internationale Anmeldenummer :
**PCT/CH90/00008**

(87) Internationale Veröffentlichungsnummer :
**WO 90/10191 07.09.90 Gazette 90/21**

(54) **POLARISATIONSINTERFEROMETER.**

(30) Priorität : **03.03.89 CH 803/89**

(43) Veröffentlichungstag der Anmeldung :
**22.05.91 Patentblatt 91/21**

(45) Bekanntmachung des Hinweises auf die Patenterteilung :
**14.09.94 Patentblatt 94/37**

(84) Benannte Vertragsstaaten :
**AT BE CH DE DK ES FR GB IT LI LU NL SE**

(56) Entgegenhaltungen :
**DE-A- 3 226 137**
**FR-A- 2 340 540**
**US-A- 4 265 540**
**US-A- 4 585 345**
**APPLIED OPTICS AND ENGINEERING, ed. R. Kingslake, vol. 1, Academic Press, Inc. (London) Ltd. 1965, Seiten 340 und 341**
**Lexikon der Optik (Hrsg.: Heinz Haberkorn), Leipzig 1988, Seite 281**

(73) Patentinhaber : **BÜHLER AG**
**CH-9240 Uzwil (CH)**
Patentinhaber : **Bran + Lübbe GmbH**
**Werkstrasse 4**
**D-22844 Norderstedt (DE)**

(72) Erfinder : **WAGNER, Heinz**
**Kleinalbis 33**
**CH-8045 Zürich (CH)**
Erfinder : **LABHART, Martin**
**Lindenbergstr. 12**
**CH-8630 Rüti (CH)**
Erfinder : **GLAUS, Ulrich**
**Widacherweg 13**
**CH-8630 Rüti (CH)**

(74) Vertreter : **Lusuardi, Werther Giovanni, Dr.**
**Dr. Lusuardi AG,**
**Kreuzbühlstrasse 8**
**CH-8008 Zürich (CH)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 427 797 B1

**Beschreibung**

Die Erfindung bezieht sich auf ein Polarisationsinterferometer gemäss dem Oberbegriff des Anspruchs 1.

Das wichtigste und meistverwendete Interferometer ist das Michelsonsche mit seinen vielen Varianten. Das Licht einer meist monochromatischen Lichtquelle wird an einer halbdurchlässigen, verspiegelten Fläche einer optischen Teilungsplatte in zwei Teilbündel zerlegt. Nach deren Reflexion an zwei Spiegeln vereinigt die Teilungsplatte beide wieder zu einem einzigen Lichtbündel. Diese Vereinigung führt zu Interferenzstreifen, deren Krümmung oder Verschiebung ein Mass für die Verschiedenheit der optischen Lichtwege zwischen den beiden Teilbündeln ist.

Aus der FR-A-2 340 540 ANVAR ist auch bereits ein Polarisationsinterferometer bekannt, welcher eine Lichtquelle, einen Polarisator, ein Interferometer, bei dem der in einem doppelbrechenden Element erzeugte ordentliche und ausserordentliche Lichtstrahl miteinander interferieren können, einen Analysator, eine Anzeigevorrichtung für die Interferenzstreifen und einen Photonendetektor umfasst. Mit diesem bekannten Gerät ist allerdings keine weitere Verarbeitung des erhaltenen Interferogramms möglich; insbesondere auch keine Transformation zu einem aussagefähigen Spektrogramm.

Die bekannten Interferometer können generell für eine grössere Anzahl von Aufgaben eingesetzt werden, beispielsweise für:

- Das Messen der spektralen Verteilung des Lichts;
- das Messen der Lichtgeschwindigkeit;
- das Messen der Fehler von optischen Platten, Linsen und ganzen Objektiven;
- das unmittelbare Messen von Längen und Längenunterschieden;
- das Messen von Schlieren und Strömungen.

Im Dokument APPLIED OPTICS AND ENGINEERING, ed. R.Kingslake, vol. 1, Academic Press, Inc. (London) LTD., 1965, Seiten 340 und 341 ist ein Retardator, in Form des sogenannten Babinet-Kompensators zeichnerisch dargestellt und im Text dahingehend kommentiert, dass statt des Babinetkompensators auch ein sogenannter SOLEIL-Kompensator eingesetzt werden kann, mit welchem ein Lichtstrahl polarisiert werden kann. Im weiteren wird im Lexikon der Optik (Hrsg.: Heinz Haberkorn), Leipzig 1988, Seite 281 ein Polarisationsmikroskop offenbart, welches die Betrachtung von Interferenzfiguren gestattet.

Die bekannten Interferometer weisen jedoch folgende Nachteile auf:

- Zur Messung der spektralen Verteilung können sie üblicherweise nur für Licht bis ins mittlere Infrarot verwendet werden, für kurzwelligeres Licht muss ein hoher apparativer Aufwand getrieben werden;
- die Planarität der verwendeten optischen Bauteile muss sehr hoch sein; und
- in einem 2-Strahl-Interferometer ist eine präzise Führung des bewegten Spiegels notwendig.

Hier will die Erfindung Abhilfe schaffen. Der Erfindung liegt die Aufgabe zugrunde, ein Polarisationsinterferometer zu schaffen, welches gegenüber herkömmlichen Geräten:

- den Spektralbereich des Polarisationsinterferometers bei gegenüber der bekannten Michelsonschen Anordnung gleichbleibendem Aufwand um das Hundertfache vergrössert; und
- durch das der Erfindung zugrundeliegende Einstrahl-Interferometer eine robuste, gegenüber Vibrationen relativ unempfindliche Anordnung erlaubt.

Die Erfindung löst die gestellte Aufgabe mit einem Polarisationsinterferometer, welches die Merkmale des Anspruchs 1 aufweist.

Die durch die Erfindung erreichten Vorteile sind im wesentlichen darin zu sehen, dass dank des erfindungsgemässen Polarisationsinterferometers mit sämtlichen bekannten und für die Michelsonsche Interferometrie benützen Arten der Messung der Verschiebungslänge des bewegten gegenüber dem festgehaltenen Spiegel eine Erweiterung des messbaren Spektralbereiches um mindestens zwei Zehnerpotenzen erreicht werden kann. Im weiteren müssen an die im erfindungsgemässen Polarisationsinterferometer verwendeten optischen Bauteile viel weniger hohe Ansprüche in bezug auf Präzision und Planarität gestellt werden.
Im Gegensatz zum Zweistrahl-Interferometer werden beim erfindungsgemässen Polarisationsinterferometer die zwei senkrecht zueinander polarisierten Teile ein und desselben Lichtstrahls miteinander zur Interferenz gebracht. Dies hat den Vorteil, dass die räumlich laterale Interferenz auch bei geometrischen Abbildungsfehlern (z.B. durch mechanische Vibrationen oder mangelhafte Antriebe und Führungen) vollständig erhalten bleibt, da beide Polarisationskomponenten an den gleichen Ort abgebildet werden. Dies erlaubt insbesondere eine wesentlich höhere Geschwindigkeit bei der Aufnahme des Interferogramms.

Das erfindungsgemässe Polarisationsinterferometer eignet sich neben den bereits erwähnten Anwendungen, wegen seiner mechanischen Unempfindlichkeit auf Umgebungseinflüsse und der geringen Messzeit, insbesondere für die Routineanalytik in Labor und Industriebetrieb, z.B. lässt sich durch Aufnahme eines Spektrums im nahen IR-Wellenlängenbereich die Identität von Nitrobenzol und das Vorhandensein von möglichen

Verunreinigungen rasch und zuverlässig bestimmen.

Eine weitere bevorzugte Verwendung des erfindungsgemässen Polarisationsinterferometers ist diejenige als Spektrometer im nahen IR und im sichtbaren Wellenlängenbereich.

Ein Ausführungsbeispiel der Erfindung, welches zugleich das Funktionsprinzip erläutert, ist in der Zeichnung dargestellt und wird im folgenden näher beschrieben.

Fig. 1 stellt eine schematische Anordnung eines erfindungsgemässen Polarisationsinterferometers dar;

Bei dem in Fig. 1 dargestellten erfindungsgemässen Polarisationsinterferometer wird das Licht einer Lichtquelle 1 durch einen Kollimator 2 in einen parallelen Strahl verwandelt. Nach dem Kollimator 2 durchquert der Lichtstrahl einen polarisierenden Strahlteiler 3, der ihn linear polarisiert mit Polarisationsrichtung P. Danach geht er durch ein System bestehend aus drei doppelbrechenden Elementen 4,5,6. Das eine Element, das als Kompensator 4 bezeichnet wird, hat seine optische Achse gegenüber den beiden anderen doppelbrechenden Elementen 5,6 in der Ebene senkrecht zum Lichtstrahl um 90° Grad verdreht. Die zwei anderen doppelbrechenden Elemente sind zwei, längs entgegengesetzter Seitenflächen gegeneinander verschiebbar angeordnete, sich zu einem Quader ergänzende, optische Keile 5,6. Die Projektionen der optischen Achsen dieser beiden Keile 5,6 in die Ebene senkrecht zum parallelen Lichtstrahl stimmen überein und sind gemäss dem oben erwähnten Winkel gegenüber dem Kompensator 4 orientiert. Die voneinander abgewandten Seiten der beiden optischen Keile 5,6 stehen senkrecht im Lichtstrahl und die einander zugewandten Seiten sind parallel zueinander angeordnet. Der eine der beiden Keile 6 kann in Richtung seiner Hypothenuse verschoben werden (Pfeilrichtung), wodurch der Gesamtweg des Lichtstrahls innerhalb der drei doppelbrechenden Elemente 4,5,6 kontinuierlich verstellbar wird. Eine mögliche Realisierung zur Verschiebung des Keils 6 besteht aus einer (nicht dargestellten) Spindel (mit konstanter Steigung), die durch einen Schrittmotor angetrieben wird. Die Spindel ist am feststehenden Teil des Schlittens, in Richtung der Hypothenuse des Keiles befestigt, die Mutter am beweglichen Teil. Wird der Schrittmotor mit Wechselstrom, konstanter Frequenz und Phase betrieben, kann das Interferogramm synchron dazu abgetastet werden (rapid scan method).

Hinter dem beweglichen Keil 6 befindet sich ein Spiegel 14, der, senkrecht zur Bewegungsrichtung des Lichtstrahls, diesen in sich selbst zurückreflektiert. Der Strahl durchquert nun die Elemente 4,5,6 in entgegengesetzter Richtung. Er wird dann am Strahlteiler 3 in Richtung des Detektors 8 reflektiert und gleichzeitig linear polarisiert mit Polarisationsrichtung senkrecht zur oben erwähnten Richtung P. Wenn der Lichtweg durch den Kompensator 4 genau gleich lang wie der Gesamtlichtweg (Hin- und Zurückweg) durch die beiden optischen Keile 5,6 ist, wird die durch die Doppelbrechung erzeugte Verzögerung oder Verschnellerung des ausserordentlichen gegenüber dem ordentlichen Lichtstrahl genau aufgehoben und dies bewirkt, dass kein Licht in den Photonendetektor 8 dringt.

Misst man die Verschiebung des grossen optischen Keils 6 bezüglich dieses Punktes und verschiebt man den grossen optischen Keil 6 um die Länge x, so tritt durch die schon erwähnte Verzögerung des einen gegenüber dem anderen Lichtstrahl in den doppelbrechenden Elementen 4,5,6 eine Interferenz des ordentlichen mit dem ausserordentlichen Lichtstrahl auf. Das entsprechende Interferenzmuster S(x) ist gegeben durch

$$S(x) = \tfrac{1}{2}\int_{\infty}^{\infty} d\sigma I_L(\sigma)\eta_D(\sigma)\{1-\cos(2\pi\,\Delta n\,\sin\alpha\sigma x)\} \qquad [1]$$

wobei $I_L(\sigma)$ das Spektrum der Lichtquelle und $\sigma$ die Wellenzahl gemessen in $cm^{-1}$ darstellt. $\eta_D(\sigma)$ beschreibt die spektrale Empfindlichkeit des Detektors 8, $\Delta n = n_e - n_o$ ist die Doppelbrechung, $n_e$ der ausserordentliche, $n_o$ der ordentliche Brechungsindex, und $\alpha$ der Keilwinkel gemäss Fig. 1.

Das Interferogramm S(x) wird nun für diskrete und äquidistante Keilverschiebungen $\Delta x$, erzeugt durch definierte Drehung der Spindel, gemessen und digitalisiert. Das daraus durch diskrete Fouriertransformation erhaltene Spektrum ist dann nach Abtasttheorem bis zur kleinsten Wellenlänge

$$\lambda_{min} = 2\Delta n\Delta x\sin\alpha \qquad [2]$$

erhältlich, falls die Lichtquelle bis dort genügend Intensität hat und der Detektor dort empfindlich ist. Verschiebt man bei einem Michelsonschen Interferometer den beweglichen Spiegel jeweils um die Länge $\Delta x$, so hat das Abtasttheorem die Form

$$\lambda_{min} = 2\Delta x \qquad [3]$$

Für einen Quarzkeil mit $\alpha = 30°$ und $\Delta n \sim 10^{-2}$ ergibt sich aus Formel [2]

$$\lambda_{min} = 10^{-2}\,\Delta x \qquad [4]$$

Das heisst man kann mit einem Quarzkeil bei gleicher Schrittgrösse $\Delta x$ ein Spektrum bis zu einer gegenüber der bekannten Michelsonschen Anordnung 200 mal kleineren Wellenlänge messen.

Die am Detektor 8 gemessene Lichtintensität ist somit durch die Formel [1] gegeben, wobei die Verschiebungslänge x wegen der Spiegelung des Lichtstrahls durch 2x zu ersetzen ist.

Der verwendete Photonendetektor 8 besteht zum Beispiel aus einer Bleisulfidzelle oder einer Siliziumphotodiode. Der im Photonendetektor 8 erzeugte Strom kann verstärkt und mittels eines nicht dargestellten Analog/Digital-Wandlers in ein numerisches Interferogramm umgewandelt werden, das digital weiterverarbeitet werden kann. Durch FFT (Fast Fourier Transformation) wird schliesslich ein interpretierbares Spektrum erhalten.

## Patentansprüche

1. Polarisationsinterferometer mit einer Lichtquelle (1), einem Kollimator (2) zur Erzeugung eines parallelen Lichtstrahles, einem ersten polarisierenden Element (3), welches den parallelen Lichtstrahl polarisiert, einem doppelbrechenden Element (4,5,6) mit mindestens zwei planparallelen Seitenflächen, welche senkrecht zum parallelen, polarisierten Lichtstrahl stehen und einem zweiten polarisierenden Element (7), welches das aus dem doppelbrechenden Element (4,5,6) austretende Licht polarisiert und einem Photonendetektor (8) zuführt, dadurch gekennzeichnet,
   A) dass das doppelbrechende Element (4,5,6) aus zwei, längs entgegengesetzter Seitenflächen gegeneinander verschiebbar angeordneten, sich zu einem Quader ergänzenden, optischen Keile (5,6) und einer als Kompensator dienenden doppelbrechenden planparallelen Platte (4) besteht,
   B) dass die optische Achse des Kompensators (4) gegenüber derjenigen der beiden Keile (5,6) in der Ebene senkrecht zum Lichtstrahl um einen endlichen Winkel verdreht ist,
   C) dass die optischen Achsen der beiden Keile (5,6) übereinstimmen,
   D) dass die Polarisations-Achsen der beiden Polarisatoren (3,7) senkrecht oder parallel zueinander stehen und nicht parallel zu den optischen Achsen der beiden Keile (5,6) des doppelbrechenden Elementes (4,5,6) ausgerichtet sind, und
   E) dass das erste polarisierende Element (3) aus einem polarisierenden Strahlteiler besteht, dass hinter dem doppelbrechenden Element (4,5,6) ein Spiegel (14) angeordnet ist, welcher den aus dem doppelbrechenden Element (4,5,6) austretenden Lichtstrahl in sich zurückspiegelt, dass das zweite polarisierende Element mit dem polarisierenden Strahlteiler (3) identisch ist und das aus dem doppelbrechenden Element (4,5,6) austretende reflektierte Licht linear polarisiert und auf den im zur Lichtquelle (1) konjugierten Arm des Strahlteilers (3) angeordneten Photodetektor (8) leitet und dass die Polarisationsrichtung des polarisierenden Strahlteilers (3) nicht parallel zu den Achsen der beiden Keile (5,6) des doppelbrechenden Elementes (4,5,6) ausgerichtet ist.

2. Polarisationsinterferometer nach Anspruch 1, dadurch gekennzeichnet, dass die optische Achse des Kompensators (4) gegenüber derjenigen der beiden Keile (5,6) in der Ebene senkrecht zum Lichtstrahl um 90 Grad verdreht ist.

3. Polarisationsinterferometer nach einem der Ansprüche 1 oder 2, dadurch gekennzeichnet, dass die optischen Achsen der beiden Polarisatoren (3,7) einen Winkel von 45 Grad zu den Achsen der beiden Keile (5,6) des doppelbrechenden Elementes (4,5,6) aufweisen.

4. Polarisationsinterferometer nach einem der Ansprüche 1 bis 3, dadurch gekennzeichnet, dass die Polarisationsrichtung des polarisierenden Strahlteilers (3) einen Winkel von 45 Grad zu den Achsen der beiden Keile (5,6) des doppelbrechenden Elementes (4,5,6) aufweist.

5. Polarisationsinterferometer nach einem der Ansprüche 1 bis 4, dadurch gekennzeichnet, dass ein monochromatischer Strahl (9) hinter dem zweiten polarisierenden Element (7) mittels eines ersten Strahlteilers (10) in entgegengesetzter Richtung in den Messstrahl eingekoppelt wird und vor dem ersten polarisierenden Element (3) mit einem zweiten Strahlteiler (11) ausgekoppelt wird und auf einen Photonendetektor (13) geführt wird.

6. Polarisationsinterferometer nach einem der Ansprüche 1 bis 4, dadurch gekennzeichnet, dass ein monochromatischer Strahl vor dem ersten polarisierenden Element (3) mittels eines ersten Strahlteilers (11) in den Messstrahl eingekoppelt wird und nach dem zweiten polarisierenden Element (7) mit einem zweiten Strahlteiler (10) ausgekoppelt wird und auf einen Photonendetektor geführt wird.

7. Polarisationsinterferometer nach Anspruch 5 oder 6, dadurch gekennzeichnet, dass vor dem Photonendetektor (13) ein optisches Bandpassfilter (12) der Wellenlänge des monochromatischen Strahles angeordnet ist.

**8.** Polarisationsinterferometer nach einem der Ansprüche 1 bis 4, dadurch gekennzeichnet, dass ein paralleler monochromatischer Lichtstrahl (9) an einem Strahlteiler (15) in zwei Strahlen aufgeteilt wird, wobei der erste Strahl mittels eines zwischen dem ersten polarisierenden Element (3) und dem Kompensator (4) angeordneten Spiegels (16) in den Strahlengang des doppelbrechenden Elementes (4,5,6) eingekoppelt wird und der zweite Strahl mittels des Spiegels (17) zu einem zwischen dem doppelbrechenden Elemente (4,5,6) und dem zweiten polarisierenden Element (7) angeordneten Strahlteiler (18) reflektiert wird und die beiden reflektierten Strahlen beim Strahlteiler (18) wieder zusammentreffen und hernach aus dem Strahlengang ausgekoppelt und auf einen Detektor (13) geführt werden.

**9.** Polarisationsinterferometer nach einem der Ansprüche 1 bis 4, dadurch gekennzeichnet, dass der bewegliche Keil (6) des doppelbrechenden Elementes (4,5,6) mit dem beweglichen Spiegel (21) eines Michelson Interferometers (9,13,19,20,21) fest verbunden ist.

**10.** Polarisationsinterferometer nach einem der Ansprüche 1 bis 4, dadurch gekennzeichnet, dass dem beweglichen Keil (6) des doppelbrechenden Elementes (4,5,6) ein Massstab zur Messung der Längenverschiebung x des Keiles (6) zugeordnet ist.

**11.** Polarisationsinterferometer nach einem der Ansprüche 1 bis 4, dadurch gekennzeichnet, dass dem beweglichen Keil (6) des doppelbrechenden Elementes (4,5,6) ein Beugungsgitter zur Messung der Längenverschiebung x des Keiles (6) nach der Moire-Streifenmethode zugeordnet ist.

**12.** Polarisationsinterferometer nach einem der Ansprüche 1 bis 11, dadurch gekennzeichnet , dass der nach dem zweiten polarisierenden Element (7) angeordnete Photonendetektor (8) eine Bleisulfidzelle oder eine Siliziumphotodiode ist.

**13.** Verwendung des Polarisationsinterferometers nach einem der Ansprüche 1 bis 12, dadurch gekennzeichnet, dass der im Photonendetektor (8) erzeugte Strom durch eine elektronische Schaltung verstärkt wird und mittels eines Analog/Digital-Wandlers zu äquidistante Verschiebungspunkten in ein diskretes numerisches Interferogramm umgewandelt wird.

**14.** Verwendung nach Anspruch 13, dadurch gekennzeichnet, dass das numerische Interferogramm digital gefiltert wird und nach einer FFT (Fast Fourier Transformation) als Spektrogramm dargestellt wird.

## Claims

**1.** Polarisation interferometer, having a light source (1), a collimator (2) for producing a parallel light beam, a first polarising element (3) which polarises the parallel light beam, a double-refracting element (4, 5, 6) with at least two plane-parallel side surfaces which are situated perpendicularly to the parallel polarised light beam, and a second polarising element (7) which polarises the light issuing from the double-refracting element (4, 5, 6) and passes it to a photon detector (8), characterised in

A) that the double-refracting element (4, 5, 6) consists of two optical wedges (5, 6) which are arranged to be displaceable relatively to one another along opposite side surfaces and which complement one another to form a parallelepiped, and of a double-refracting plane-parallel plate (4) acting as a compensator,

B) that the optical axis of the compensator (4) is turned through a finite angle relatively to the optical axis of the two wedges (5, 6) in the plane perpendicular to the light beam,

C) that the optical axes of the two wedges (5, 6) coincide,

D) that the polarisation axes of the two polarisers (3, 7) are situated perpendicular or parallel relatively to one another, and are aligned to be non-parallel to the optical axes of the two wedges (5, 6) of the double-refracting element (4, 5, 6), and

E) that the first polarising element (3) consists of a polarising beam divider, that after the double-refracting element (4, 5, 6) a mirror (14) is arranged which reflects back into itself the light beam issuing from the double-refracting element (4, 5, 6), that the second polarising element is identical with the polarising beam divider (3) and polarises linearly the reflected light issuing from the double-refracting element (4, 5, 6) and conducts it to the photodetector (8) arranged in that arm of the beam divider (3)

which is conjugate to the light source (1), and that the polarisation direction of the polarising beam divider (3) is aligned to be non-parallel to the axes of the two wedges (5, 6) of the double-refracting element (4, 5, 6).

2. Polarisation interferometer according to claim 1, characterised in that the optical axis of the compensator (4) is turned through 90 degrees relatively to that of the two wedges (5, 6) in the plane perpendicular to the light beam.

3. Polarisation interferometer according to one of claims 1 or 2, characterised in that the optical axes of the two polarisers (3, 7) form an angle of 45 degrees relatively to the axes of the two wedges (5, 6) of the double-refracting element (4, 5, 6).

4. Polarisation interferometer according to one of claims 1 to 3, characterised in that the polarisation direction of the polarising beam divider (3) forms an angle of 45 degrees with respect to the axes of the two wedges (5, 6) of the double-refracting element (4, 5, 6).

5. Polarisation interferometer according to one of claims 1 to 4, characterised in that a monochromatic beam (9) is coupled into the measurement beam in the opposite direction by means of a first beam divider (10) after the second polarising element (7), and, before the first polarising element (3), is decoupled with a second beam divider (11) and guided to a photon detector (13).

6. Polarisation interferometer according to one of claims 1 to 4, characterised in that a monochromatic beam is coupled into the measurement beam by means of a first beam divider (11) before the first polarising element (3), and, after the second polarising element (7), is decoupled with a second beam divider (10) and guided to a photon detector.

7. Polarisation interferometer according to claim 5 or 6, characterised in that an optical band pass filter (12) of the wavelength of the monochromatic beam is arranged before the photon detector (13).

8. Polarisation interferometer according to one of claims 1 to 4, characterised in that a parallel monochromatic light beam (9) is divided at a beam divider (15) into two beams, and the first beam is coupled into the ray path of the double-refracting element (4, 5, 6) by means of a mirror (16) arranged between the first polarising element (3) and the compensator (4), and the second beam is reflected by means of the mirror (17) to a beam divider (18) situated between the double-refracting element (4, 5, 6) and the second polarising element (7), and the two reflected beams meet each other again at the beam divider (18) and thereafter are decoupled from the ray path and guided to a detector (13).

9. Polarisation interferometer according to one of claims 1 to 4, characterised in that the movable wedge (6) of the double-refracting element (4, 5, 6) is connected securely to the movable mirror (21) of a Michelson interferometer (9, 13, 19, 20, 21).

10. Polarisation interferometer according to one of claims 1 to 4, characterised in that a scale for measuring the longitudinal displacement x of the wedge (6) is associated with the movable wedge (6) of the double-refracting element (4, 5, 6).

11. Polarisation interferometer according to one of claims 1 to 4, characterised in that a diffraction grating for measuring the longitudinal displacement x of the wedge (6) in accordance with the moire striping method is associated with the movable wedge (6) of the double-refracting element (4, 5, 6).

12. Polarisation interferometer according to one of claims 1 to 11, characterised in that the photon detector (8) situated after the second polarising element (7) is a lead sulphide cell or a silicon photodiode.

13. Use of the polarisation interferometer according to one of claims 1 to 12, characterised in that the current produced in the photon detector (8) is amplified by an electronic circuit and is converted by means of an analog-to-digital converter for equidistant displacement points into a discrete numeric interferogram.

14. Use according to claim 13, characterised in that the numeric interferogram is filtered digitally and is represented as a spectrogram after FFT (Fast Fourier Transformation).

## Revendications

1. Interféromètre polarisant avec une source lumineuse (1), un collimateur (2) destiné à produire un rayon lumineux parallèle, un premier élément polarisant (3), polarisant le rayon lumineux parallèle, un élément (4, 5, 6) à double réfraction, avec au moins deux faces latérales parallèles planes, placées perpendiculaires par rapport au rayon lumineux polarisé parallèle et un deuxième élément polarisant (7), polarisant la lumière sortant de l'élément à double polarisation (4, 5, 6) et l'amenant à un détecteur de photons (8), caractérisé
   A) en ce que l'élément à double polarisation (4, 5, 6) est composé de deux prismes optiques (5, 6) disposés déplaçables l'un par rapport à l'autre le long de leurs faces latérales placées en regard, se complétant pour former un parallélépipède, et d'une plaque (4) plane parallèle à double indice de réfraction servant de compensateur,
   B) en ce que l'axe optique du compensateur (4) est tourné d'un angle fini par rapport à celui des deux prismes (5, 6), dans le plan perpendiculaire au rayon lumineux,
   C) en ce que les axes optiques des deux prismes (5, 6) coïncident,
   D) en ce que les axes de polarisation des deux polarisateurs (3, 7) sont orientés perpendiculairement ou parallèlement l'un par rapport à l'autre et non parallèlement par rapport aux axes optiques des deux prismes (5, 6) de l'élément à double indice de réfraction (4, 5, 6) , et
   E) en ce que le premier élément polarisant (3) est composé d'un diviseur de rayon polarisant, en ce que derrière l'élément à double indice de réfraction (4, 5, 6) est disposé un miroir (14), qui réfléchit en lui le rayon lumineux sortant de l'élément à double indice de réfraction (4, 5, 6), en ce que le deuxième élément polarisant est identique au diviseur de rayon (3) polarisant et en ce que la lumière réfléchie sortant de l'élément à double indice de réfraction (4, 5, 6) est polarisée de façon linéaire et dirigée sur le détecteur de photons (8) disposé dans le bras conjugué à la source lumineuse (1) du diviseur de rayon (3) et en ce que la direction de polarisation du diviseur de rayon polarisant (3) est orienté non parallèlement par rapport aux axes des deux prismes (5, 6) de l'élément à double indice de réfraction (4, 5, 6).

2. Interféromètre polarisant selon la revendication 1, caractérisé en ce que l'axe optique du compensateur (4) est tourné de 90 degrés, dans le plan perpendiculaire au rayon lumineux, par rapport à celui des deux prismes (5, 6).

3. Interféromètre polarisant selon l'une des revendications 1 ou 2, caractérisé en ce que les axes optiques des deux polarisateurs (3, 7) font un angle de 45 degrés par rapport aux axes des deux prismes (5, 6) de l'élément à double indice de réfraction (4, 5, 6).

4. Interféromètre polarisant selon l'une des revendications 1 à 3, caractérisé en ce que la direction de polarisation du diviseur de rayon polarisant (3) fait un angle de 45 degrés par rapport aux axes des deux prismes (5, 6) de l'élément à double indice de réfraction (4, 5, 6).

5. Interféromètre polarisant selon l'une des revendications 1 à 4, caractérisé en ce qu'un rayon monochromatique (9) est couplé dans le rayon de mesure, derrière le deuxième élément polarisant (7), au moyen d'un premier diviseur de rayon (10), dans la direction opposée, et est découplé avant le premier élément polarisant (3) à l'aide d'un deuxième diviseur de rayon (11) et guidé sur un détecteur de photons (13).

6. Interféromètre polarisant selon l'une des revendications 1 à 4, caractérisé en ce qu'un rayon monochromatique est couplé dans le rayon de mesure avant le premier élément polarisant (3), à l'aide d'un premier diviseur de rayon (11) et est découplé après le deuxième élément polarisant (7) à l'aide d'un deuxième diviseur de rayon (10) et guidé sur un détecteur de photons.

7. Interféromètre polarisant selon la revendication 5 ou 6, caractérisé en ce qu'un filtre passe-bande (12) optique, ayant la longueur d'onde du rayon monochromatique, est disposé avant le détecteur de photons (13).

8. Interféromètre polarisant selon l'une des revendications 1 à 4, caractérisé en ce qu'un rayon lumineux (9) monochromatique parallèle est divisé sur un diviseur de rayon (15) en deux rayons, le premier rayon étant couplé dans la trajectoire de rayon de l'élément à double indice de réfraction (4, 5, 6), au moyen d'un miroir (16) disposé entre le premier élément polarisant (3) et le compensateur (4), et le deuxième rayon est réfléchi au moyen du miroir (17) sur un diviseur de rayon (18) disposé entre l'élément à double

indice de réfraction (4, 5, 6) et le deuxième élément polarisant (7) et les deux rayons réfléchis étant de nouveau réunis dans le diviseur de rayon (18), puis découplés hors de la trajectoire de rayon et guidés sur un détecteur (13).

**9.** Interféromètre polarisant selon l'une des revendications 1 à 4, caractérisé en ce que le prisme mobile (7) de l'élément à double indice de réfraction (4, 5, 6) est relié rigidement au miroir mobile (21) d'un interféromètre de Michelson (9, 13, 19, 20, 21).

**10.** Interféromètre polarisant selon l'une des revendications 1 à 4, caractérisé en ce qu'une règle graduée destinée à la mesure du déplacement longitudinal x du prisme (6) est associée au prisme mobile (6) de l'élément à double indice de réfraction (4, 5, 6).

**11.** Interféromètre polarisant selon l'une des revendications 1 à 4, caractérisé en ce qu'une grille de diffraction destinée à la mesure du déplacement longitudinal x du prisme (6) selon la méthode des bandes de moirage est associée au prisme mobile (6) de l'élément à double indice de réfraction (4, 5, 6).

**12.** Interféromètre polarisant selon l'une des revendications 1 à 11, caractérisé en ce que le détecteur de photons (8) disposé derrière le deuxième élément polarisant (7) est une cellule au sulfure de plomb ou une photodiode au silicium.

**13.** Utilisation de l'interféromètre polarisant selon l'une des revendications 1 à 12, caractérisé en ce que le courant produit dans le détecteur de photons (8) est amplifié au moyen d'un circuit électronique et converti en un interférogramme numérique discret au moyen d'un convertisseur analogique/numérique, donnant des points de déplacement équidistants.

**14.** Utilisation selon la revendication 13, caractérisée en ce que l'interférogramme numérique est soumis à un filtrage numérique et représenté sous forme de spectrogramme, après avoir subi une transformation FFT (Fast Fourier Transformation).

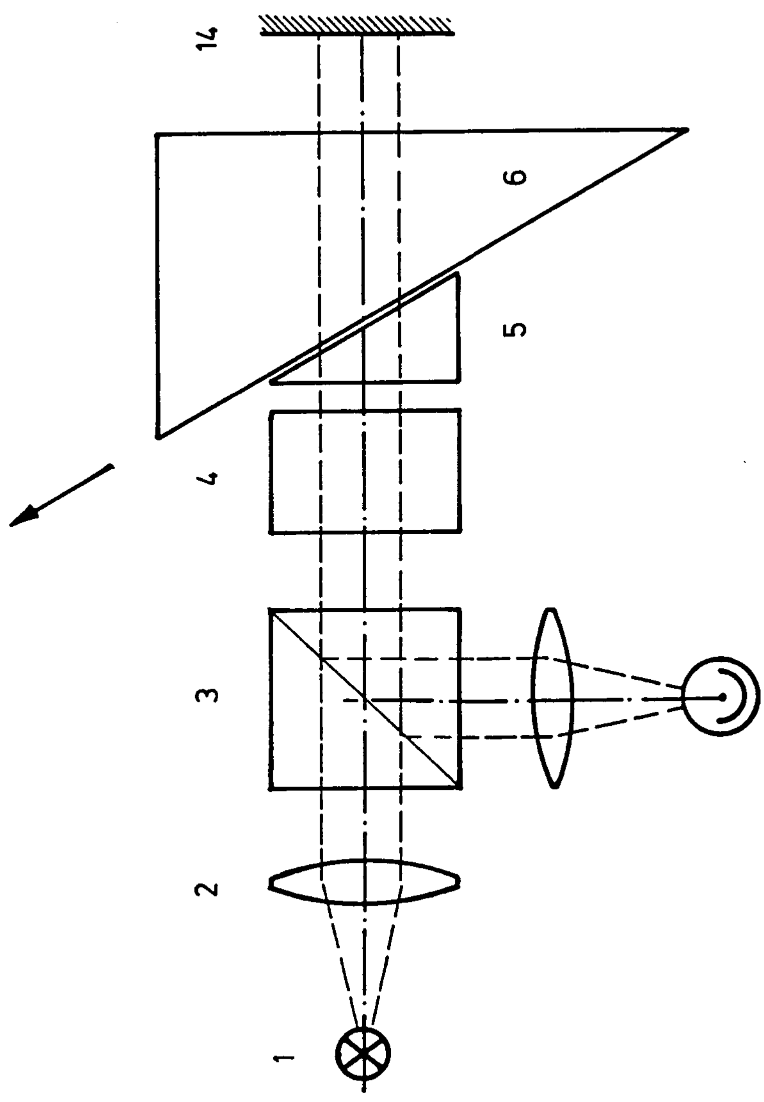


Fig. 1